# EUROPEAN PATENT APPLICATION

(11) **EP 4 671 303 A1**
(43) Date of publication of application: **31.12.2025**
(21) Application number: 25185115.0
(22) Date of filing: 25.06.2025
(51) Int. Cl.: C08G 71/02, C07D 317/36, C08G 71/04, C08L 75/04, C08L 75/06, C08L 75/08, C09D 175/02, C09D 175/06, C09D 175/08, C09J 175/06, C09J 175/08

(54) **CONDENSATION TYPE POLYURETHANE COMPOSITION**

(30) Priority: 28.06.2024 US 202418758594
(71) Applicant: Far Eastern New Century Corporation, Taipei (TW)
(72) Inventor: Chang, Ken-Yuan, 10602 TAIPEI CITY (TW); Wang, Cheng-Ting, 10602 TAIPEI CITY (TW); Hung, Wei-Che, 10602 TAIPEI CITY (TW)
(74) Representative: Hoffmann Eitle

(57) **Abstract**

A condensation type polyurethane composition includes a first polyurethane represented by Formula (I) and a second polyurethane represented by Formula (II), preferably in a molar ratio of the first polyurethane and to the second polyurethane ranging from 20:80 to 80:20, wherein each of the substituents in Formula (I) and Formula (II) is given the definitions as set forth in the Specification and Claims. In one embodiment, the condensation type polyurethane composition has an amine value of at least 10 meq/kg.

## Description

### FIELD

The present disclosure relates to a polyurethane composition, and more particularly to a condensation type polyurethane composition.

### BACKGROUND

A conventional polyurethane is generally prepared using isocyanate and polyol as raw materials. In the manufacturing process of the conventional polyurethane, not only the isocyanate is itself toxic, but also requires use of another more toxic raw material, which is phosgene. Therefore, the industry actively pursues the concept of green manufacturing in the manufacturing process of non-isocyanate polyurethane composition (NIPU).

In the concept of green manufacturing, NIPU is mainly manufactured by a poly-addition process or a polycondensation process in which the structures of products obtained are different from each other.

U.S. 20230183423 A1 discloses that NIPU may be prepared by subjecting multiple cyclic carbonate and polyamine to an addition polymerization process. The thus synthesized NIPU has (-OH) functional groups on side chains thereof, and hence is known as polyhydroxyurethane (PHU) with a chemical structure represented by 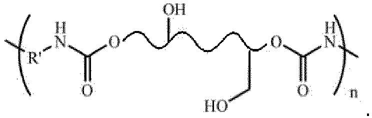 Due to the presence of abundant hydrogen bonding forces between PHU molecules, high molecular weight PHU products are difficult to obtain by addition polymerization, and thus the structural strength of PHU is not optimal.

In contrast, a condensation polymerization process generally involves reacting diamine and carbonate, followed by a transesterification reaction with polyol so as to obtain NIPU. Thus, the NIPU synthesized by the condensation polymerization process does not have side chains containing (-OH) functional groups, indicating that the chemical structure of such NIPU is different from that of PHU as described above.

CN 101696271 A, CN 103865059 A, CN 116355210 A, CN 112853531 A, and CN 104513393 B each discloses use of carbonate and diamine to prepare a dicarbamate monomer (i.e., a type of urethane diol), followed by a polymerization reaction with polyol, so as to obtain NIPU suitable for direct melt processing. However, preparation of the dicarbamate monomer requires use of organic solvents for purification by recrystallization, causing generation of a large amount of liquid waste that needs to be recycled separately, indicating that such preparation process is energy-consuming and not environmentally friendly.

In addition, TW 201634531 A and CN 107400233 B disclose use of carbonate and diamine in a molar ratio of 1:1 to prepare polyurea; however, the chemical structures of polyurea and polyurethane are very different as shown below.
Polyurea: 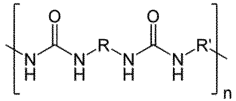
Polyurethane:

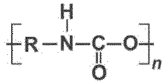

The hydrogen bonding force between polyurea molecules is very strong, and the polyurea has poor temperature resistance. For smooth processing and application of the polyurea, use of organic solvent is usually required. However, use of organic solvent will incur problems such as industrial safety concerns and recycling of liquid waste, so the industry tend to use polyurethane because polyurethane can be melt-processed and has a wide range of applications.

Although the concept of green and environmentally friendly manufacturing exist in the preparation of NIPU as mentioned above, in consideration of the processing properties (e.g.. high structural strength or high melt strength) required when NIPU is subsequently used to generate products, addition of other additives (e.g., epoxy chain extender) is usually required, or in cases when NIPU is subsequently used for bonding to other materials (such as epoxy resin) to form a laminate, sufficient reactive functional groups, for example, amine-containing functional groups or sulfur-containing functional groups, are required to facilitate adhesion.

For example, in the method for preparing the NIPU as disclosed in the aforesaid CN 104513393 B, since a purification step is required after generation of the intermediate product, the active functional groups present in the NIPU are insufficient to facilitate adhesion of the NIPU to other materials. In addition, as exemplified in the method for preparing the NIPU as disclosed in CN 104910348 B and CN 116903854 A, the only intermediate product to be subsequently reacted with diol is dimethylcarbamate (i.e., a dicarbamate), which will inhibit the generation of active functional groups during the reaction with diol to form a prepolymer, and hence incurs the problems of insufficient active functional groups and difficulty in adhesion.

### SUMMARY

Therefore, an object of the present disclosure is to provide a condensation type polyurethane composition that can alleviate at least one of the drawbacks of the prior art, which may be obtained as a condensation type non-isocyanate polyurethane composition.

According to the present disclosure, the polyurethane composition includes a first polyurethane represented by Formula (I) and a second polyurethane represented by Formula (II), preferably in a molar ratio of the first polyurethane to the second polyurethane ranging from 20:80 to 80:20, 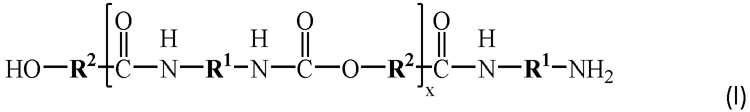 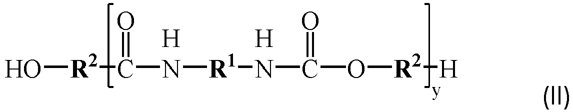 wherein
x is an integer ranging from 2 to 100;
y is an integer ranging from 2 to 100;
R¹ is a hydrocarbylene group of C₂ to C₂₀; and
R² is 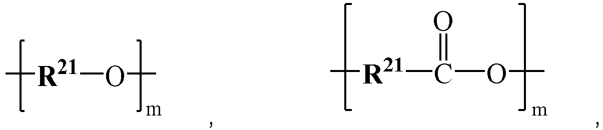 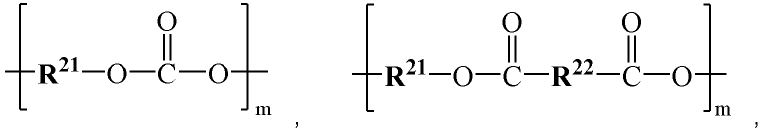 or combinations thereof,
wherein
each of R²¹ and R²² is independently a hydrocarbylene group of C₂ to C_{20;} and
m is an integer ranging from 1 to 250.
The condensation type polyurethane composition has an amine value of at least 10 meq/kg.

### DETAILED DESCRIPTION

Before the present disclosure is described in greater detail, it should be noted that if any prior art publication is referred to herein, such reference does not constitute an admission that the publication forms a part of the common general knowledge in the art, in Taiwan or any other country.

For the purpose of this specification, it will be clearly understood that the word "comprising" means "including but not limited to", and that the word "comprises" has a corresponding meaning. The words however also cover the more restrictive meanings "consisting essentially of" and "consisting of", unless it is clear from the context that additional features and/or components need to be present.

Unless otherwise defined, all technical and scientific terms used herein have the meaning commonly understood by a person skilled in the art to which the present disclosure belongs. One skilled in the art will recognize many methods and materials similar or equivalent to those described herein, which could be used in the practice of the present disclosure. Indeed, the present disclosure is in no way limited to the methods and materials described.

Where a range is indicated, the upper and lower limits are included in the range.

In the present invention, the terms "hydrocarbon", "hydrocarbyl" and "hydrocarbylene" are used to denote compounds or groups, respectively, consisting of only carbon and hydrogen atoms. Examples of such groups include aliphatic compounds and groups, such as straight or branched alkyl or alkylene groups, cycloalkyl and cycloalkylene groups, alkene and alkenyl groups, cycloalkenyl and cycloalkenylen groups, alkyne and alkylene groups, and aromatic groups, such as arylene groups, such as C6-20 aromatic groups, e.g. benzyl groups. Preferred examples of hydrocarbylene groups that are alkylene groups include methylene, ethylene, propylene, n-, s and t-butylene, pentylene and hexylene.

The present disclosure provides a condensation type polyurethane resin that can be prepared by a polycondensation process. Since the raw material does not contain the isocyanate, the condensation type polyurethane resin prepared by polycondensation process is also called the non-isocyanate polyurethane (NIPU). The present disclosure provides a condensation type polyurethane composition including a first polyurethane represented by Formula (I) and a second polyurethane represented by Formula (II), 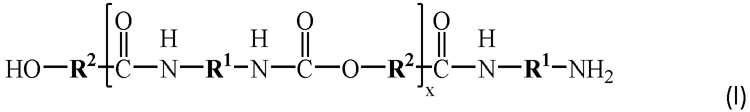 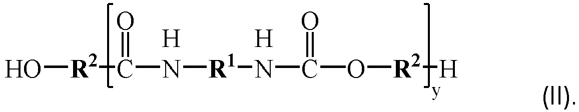 Here, the molar ratio of the first polyurethane to the second polyurethane preferably ranges from 20:80 to 80:20.In one embodiment, the molar ratio of the first polyurethane to the second polyurethane preferably ranges from 20:80 to 80:20 and the composition has an amine value of at least 10 meq/kg, such as from 10 to 35 meq/kg. The molar ratio and the amine value can be determined by any method common in the art, and preferably the methods described later are used.

In Formula (I) and Formula (II), x is an integer ranging from 2 to 100, preferably 5 to 80, more preferably 10 to 75 ; y is an integer ranging from 1 to 100, preferably 5 to 80, more preferably 10 to 75; R¹ is a hydrocarbylene group of C₂ to C₂₀, preferably C₂ to C₁₂, more preferably C₂ to C₈; and R² is 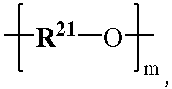 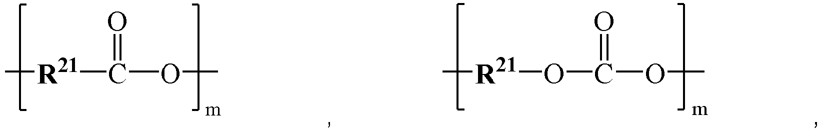 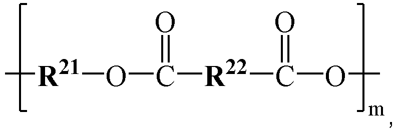 or combinations thereof, wherein each of R²¹ and R²² is independently a hydrocarbylene group of C₂ to C₂₀ , preferably C₂ to C₁₂, more preferably C₂ to C₈, still more preferably C₂ to C₄, such as C₂ or C₃; and m is an integer ranging from 1 to 250, preferably from 2 to 200 . In certain embodiments, m is an integer ranging from 2 to 100, such as from 2 to 50 or from 3 to 30

In certain embodiments, R² is 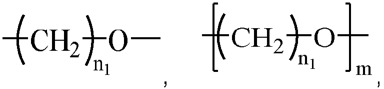 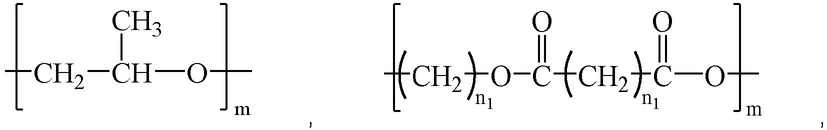 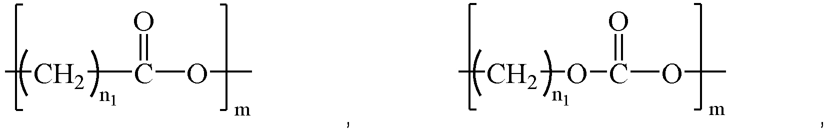 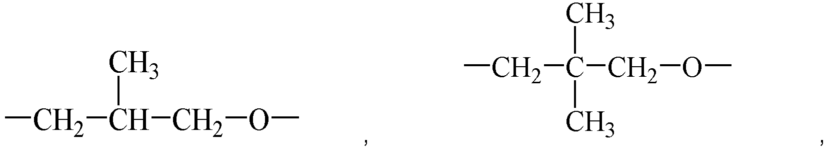 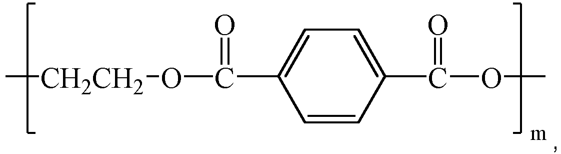 or combinations thereof, wherein n₁ is an integer ranging from 2 to 20, preferably 2 to 12, more preferably 2 to 8, such as 2 to 6, and m is an integer ranging from 1 to 250, preferably from 2 to 200, such as from 5 to 100 or from 5 to 50.

In certain embodiments, R¹ is selected from the group consisting of a cyclic hydrocarbon group, an acyclic hydrocarbon group, preferably a straight or branched alkylene group, and a combination thereof. In certain embodiments, the cyclic hydrocarbon group is selected from the group consisting of an alicyclic hydrocarbon group, an aromatic hydrocarbon group, and a combination thereof. In certain embodiments, the acyclic hydrocarbon group is selected from the group consisting of a linear hydrocarbon group, such as an alkylene group, a branched hydrocarbon group, such as a branched alkylene group, and a combination thereof. In certain embodiments, R¹ is 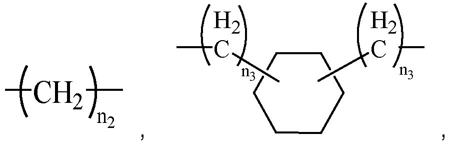 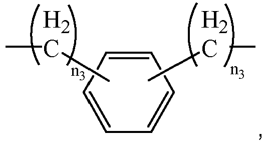 or combinations thereof, wherein n₂ is an integer ranging from 5 to 10, such as 5, 6, 7, 8, 9 or 10, and n₃ is an integer ranging from 1 to 10, such as 1, 2, 3, 4, 5, 6, 7, 8, 9, or 10, preferably an integer from 1 to 6 or 2 to 4.

In certain embodiments, the amine value of the condensation type non-isocyanate polyurethane composition is 10 meq/kg or higher, 12 meq/kg or higher, or 15 meq/kg or higher. While there is no upper limit, the amine value is typically 50 meq/kg or less. In one embodiment, the amine value ranges from 10 meq/kg to 35 meq/kg, such as from 10 meq/kg to 30 meq/kg.

In certain embodiments, the molar ratio of the first polyurethane to the second polyurethane ranges from 20.0:80.0 to 80.0:20.0, preferably from 24:76 to 76:24. In certain embodiments, the molar ratio of the first polyurethane to the second polyurethane ranges from 30:70 to 70:30, such as from 40:60 to 60:40.

In certain embodiments, the polyurethane composition further includes one or more urea group-containing compounds.

In certain embodiments, the one or more urea group-containing compound is present in an amount of not less than 10 mol% based on relative to the total number of moles (100%) of the compounds of Formula (I), Formula (II) and the one or more urea-group-containing compounds. In certain embodiments, the urea group-containing compound is present in an amount ranging from 10 mol% to 35 mol% relative to the total number of moles (100 mol%) of the compounds of Formula (I), Formula (II) and the one or more urea-group-containing compounds

In certain embodiments, the urea group-containing compound may be a compound represented by Formula (V) or Formula (VI),

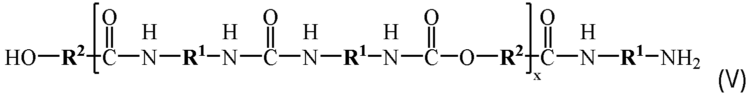

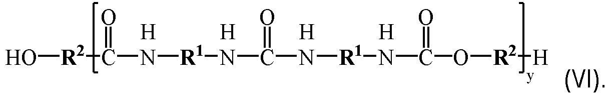

In Formula (V) and (VI), each of R¹, R², x and y are defined as mentioned in the foregoing, and also the preferred aspects thereof apply

The composition of the present invention comprises the first polyurethane represented by Formula (I) and the second polyurethane represented by Formula (II), but may also consist of, or essentially consist of, these polyurethanes. Here, the term "essentially consists of" may be interpreted such that the first and second polyurethane form 75% by weight or more, such as 80% by weight or more, 85% by weight or more, 90% by weight or more, 95% by weight or more, or 98% by weight or more of the total weight of the composition. The remainder that is not formed by the first and second polyurethane may comprise, essentially consist of or consist of one or more urea-group containing compounds, e.g. those of formula (V) and/or (VI). In one embodiment, the the first and second polyurethane form 75% by weight or more, such as 80% by weight or more, 85% by weight or more, 90% by weight or more, 95% by weight or more, or 98% by weight or more of the total weight of the composition, and 50% by weight or more, such as 75% by weight or more, or 90% by weight or more of the remainder not formed by the first and second polyurethane is formed by one or more urea-group containing compounds represented by formula (V) or (VI).

In the embodiment wherein the composition comprises one or more of the above-mentioned urea group-containing compounds, the composition may consist of, or essentially consist of, the first and second polyurethane and the urea-group containing compound(s). Here, the term "essentially consists of" may be interpreted such that the first and second polyurethane and the urea-group containing compound(s) form 75% by weight or more, such as 80% by weight or more, 85% by weight or more, 90% by weight or more, 95% by weight or more, or 98% by weight or more of the total weight of the composition, the remainder being formed by the above-mentioned urea group-containing compounds that may be represented by formula (V) or (VI).

In certain embodiments, an adhesion strength of the condensation type polyurethane composition to an epoxy resin is 9 N/cm or more, such as 10 N/cm or more, 11 N/cm or more, or 12 N/cm or more. While there is no particular upper limit, the adhesion strength may in practice be 20 N/cm or less, such as 18 N/cm or less, 17 N/cm or less, or 16 N/cm or less. Here, the adhesion strength can be determined as set out below. Without wishing to be bound by theory, it is believed that a larger proportion of primary amine groups, which can be achieved by a larger proportion of the first polyurethane of formula (I), may lead to an increase in adhesion strength.

In certain embodiments, the condensation type polyurethane composition has a number average molecular weight of 20,000 or more, such as 25,000 or more, 30,000 or more, 35,000 or more, or 40,000 or more. While there is no specific upper limit, the number average molecular weight may be 250,000 or less, such s 200,000 or less, 150,000 or less, or 120,000 or less. The number average molecular weight can be determined according to the procedures set forth in ASTM D3536 using Gel Permeation Chromatography (GPC) with polystyrene as a standard and dimethylacetamide(DMAc) as an eluent.

The present disclosure also provides a method for preparing the condensation type non-isocyanate polyurethane composition which includes subjecting a diamine compound represented by Formula (III) and a carbonate compound to a carbamation reaction so as to form a carbamate mixture that includes an amine hydrocarbamate (i.e., an amino carbamate) and a hydrocarbon dicarbamate diester (i.e., a dicarbamate), and then subjecting the carbamate mixture and a diol compound represented by Formula (IV) to a polycondensation reaction so as to form the condensation type non-isocyanate polyurethane composition,

H₂N-**R**¹-NH₂ (III)

HO-**R**²-H (IV)

In Formula (III) and Formula (IV), R¹ is a hydrocarbylene group of C₂ to C₂₀; R² is 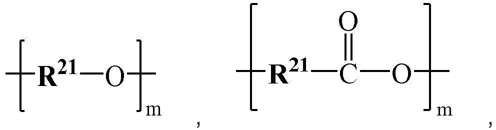 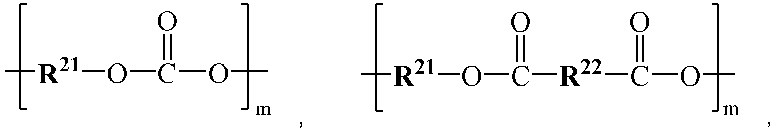 or combinations thereof, wherein each of R²¹ and R²² is independently a hydrocarbylene group of C₂ to C₂₀, and m is an integer ranging from 1 to 250.

It is readily apparent that the respective groups R¹, R², R²¹, and R²² as well as the variables x, y, and m correspond to the respective groups described above for Formula (I) and (II), respectively, and the same definition, including the same exemplary or preferred features and ranges, as explained above for the composition and Formulae (I) and (II) also apply to the method and Formulae (III) and (IV), so that a detailed description thereof is omitted.

In certain embodiments, in Formula (III) and (IV), R² is 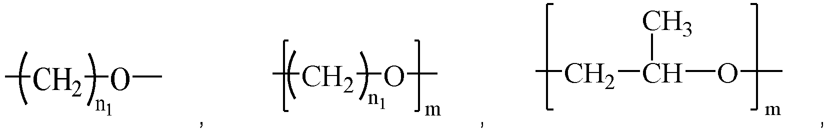 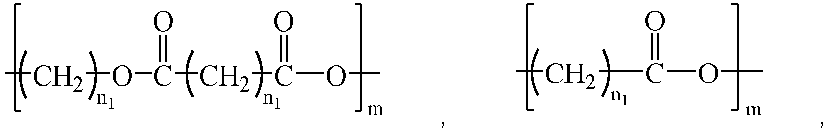 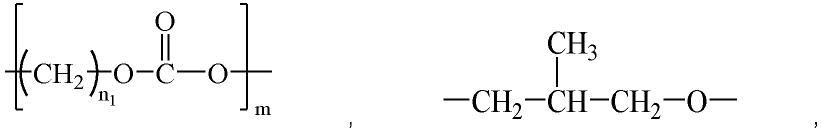 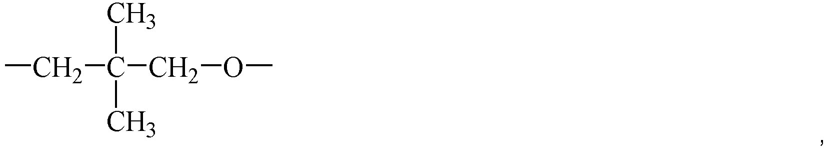 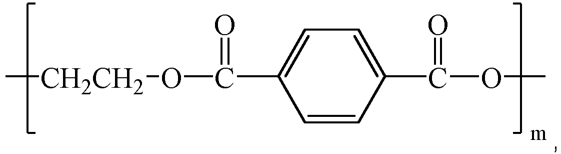 or combinations thereof, wherein n₁ is an integer ranging from 2 to 20, and m is an integer ranging from 1 to 250. In certain embodiments, m is an integer ranging from 2 to 100.

In certain embodiments, in Formula (III) and Formula (IV), R¹ is 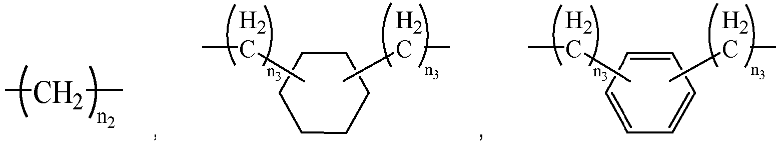 or combinations thereof, wherein n₂ is an integer ranging from 5 to 10, and n₃ is an integer ranging from 1 to 10.

In certain embodiments, the carbamation reaction is conducted at a temperature ranging from 30°C to 120°C. In certain embodiments, the polycondensation reaction is conducted at a temperature ranging from 100°C to 200°C.

In certain embodiments, the carbamation reaction is conducted at a pressure of approximately 101,325 Pa (760 torr), e.g. in the ange of from 10⁵ to 10⁷ Pa. In certain embodiments, the polycondensation reaction is conducted at a reduced pressure of less than 101,325 Pa,, e.g. less than 10,000 Pa, or less than 5,000 Pa, such as at not greater than 3999,67 Pa (30 torr).

In certain embodiments, a molar ratio of the diamine compound to the carbonate compound ranges from 1:2 to 1:10, such as from 1:3 to 1:8.

In certain embodiments, a molar ratio of the hydrocarbon dicarbamate diester in the carbamate mixture to the diol compound ranges from 1:0.01 to 1:2, such as from 0.05 to 1:2, or from 0.1 to 1.1. In certain embodiments, the molar ratio of the hydrocarbon dicarbamate diester in the carbamate mixture to the diol compound ranges from 1.0:0.2 to 1.0:1.0.

In certain embodiments, the polycondensation reaction was conducted in the presence of a catalyst. The catalyst is not particularly limited, but may be selected from the group consisting of stannous chloride, dibutyltin oxide, tin oxide, zinc oxide, zinc acetate, zinc chloride, aluminum acetate, aluminum chloride, tetrabutyl titanate, tetraisopropyl titanate, and combinations thereof. In certain embodiments, the catalyst is present in an amount ranging from 0.0001 wt% to 1 wt% based on the total weight of the carbamate mixture, the diol component and the catalyst.

In certain embodiments, the diamine compound is selected from the group consisting of cyclic diamines, acyclic diamines, and a combination thereof. In certain embodiments, the diamine compound may be selected from the group consisting of pentylenediamine, hexylenediamine, decanediamine, m-phenylenediamine, 1,3-bis(aminomethyl)cyclohexane, and combinations thereof.

In certain embodiments, the diol compound is selected from the group consisting of cyclic diol, acyclic diol, and a combination thereof. In certain embodiments, the diol compound is selected from the group consisting of ether diol (e.g., polyalkyl diol), ester diol (e.g., polyester diol), carbonate diol (e.g., polycarbonate diol), and alkyl diol (e.g., alkylene diol). In certain embodiments, the diol compound is selected from the group consisting of polyethylene glycol (PEG), poly(tetramethylene ether) glycol (PTMEG), polypropylene glycol (PPG), poly(propylene-co-ethylene) glycol (PPG-co-PEG), polybutylene adipate (PBA), poly(ε-caprolactone) (PCL), bis(2-hydroxyethyl)terephthalate (BHET) oligomer, poly(hexamethylene carbonate) diol (PHC diol), polyethylene carbonate (PEC), polypropylene carbonate (PPC), ethylene glycol (EG), propylene glycol (PG), butanediol (BDO), neopentyl glycol (NPG), 2-methyl-1,3-propanediol (MPDO), diethylene glycol (DEG), triethylene glycol (TEG), bis(2-hydroxyethyl)terephthalate (BHET), 1,4-cyclohexanedimethanol, isosorbide glycol (ISOS), tetramethylcyclobutanediol (TMCD), and combinations thereof. In certain embodiments, the diol compound has a number average molecular weight (Mₙ) ranging from 60 to 10000. In certain embodiments, the diol compound has a number average molecular weight (Mₙ) ranging from 60 to 6000, and this also applies to the exemplary diol compounds recited above.

In certain embodiments, the carbonate compound is derived from a source selected from the group consisting of biomass sources, petroleum sources, recycled sources, and carbon dioxide sources.

In certain embodiments, the carbonate compound is obtained by reacting carbon dioxide and an epoxy compound.

In certain embodiments, the carbonate compound is obtained by reacting carbon dioxide, an epoxy compound, and diol.

In certain embodiments, the carbonate compound is selected from the group consisting of a cyclic carbonate, an acyclic carbonate, a polycarbonate, and combinations thereof.

In certain embodiments, the cyclic carbonate may be selected from the group consisting of ethylene carbonate (EC), propylene carbonate (PC), butylene carbonate (BC), and combinations thereof.

In certain embodiments, the acyclic carbonate may be selected from the group consisting of dimethyl carbonate (DMC), diethyl carbonate (DEC), diphenyl carbonate (DPC), substituted acyclic carbonate, and combinations thereof. An example of the substituted acyclic carbonate may be di(diethylene glycol) carbonate (DEGC).

In certain embodiments, the polycarbonate may be selected from the group consisting of polycarbonate diol, poly(ethylene carbonate), poly(propylene carbonate), and combinations thereof.

In certain embodiments, the carbamate mixture has an amine value not less than 10 meq/kg. In certain embodiments, the amine value of the carbamate mixture ranges from 10 meq/kg to 100 meq/kg, such as from 10 meq/kg to 50 meq/kg.

In certain embodiments, the carbonate compound is ethylene carbonate, and the carbamate mixture includes di(2-hydroxyethyl) hydrocarbylenedicarbamate (i.e., a dicarbamate) and 2-hydroxyethyl (aminohydrocarbyl)carbamate (i.e., an amino carbamate).

In certain embodiments, the carbonate compound is dimethyl carbonate, and the carbamate mixture includes methyl(aminohydrocarbyl)carbamate (i.e., an amino carbamate) and dimethyl hydrocarbylenedicarbamate (i.e., a dicarbamate).

In certain embodiments, the carbamate mixture is not subjected to a purification step before the polycondensation reaction. In certain embodiments, the carbamate mixture is not subjected to a recrystallization step before the polycondensation reaction.

According to the present disclosure, the condensation type non-isocyanate polyurethane composition may be applied in various fields, e.g., automobiles, toys, biomedical products, electronic products, shoe materials (i.e., the entire shoe including outsole, midsole, insole, upper, etc.), sports equipment, textiles (e.g., fiber or film), and other daily necessities, or in food and construction industries, and may be used in coatings, adhesives, wires and cables, etc. It should be noted that in order to be applied in different fields, the condensation type non-isocyanate polyurethane composition may be required to have different properties. In this regard, the condensation type non-isocyanate polyurethane composition of the present disclosure suitable for applications in different fields may be prepared by selecting different types of the diamine compound, the carbonate compound, or the diol compound.

The present disclosure will be described by way of the following examples. However, it should be understood that the following examples are intended solely for the purpose of illustration and should not be construed as limiting the present disclosure in practice.

### Preparation of polyurethane composition

### Example 1 (E1)

First, hexane-1,6-diamine (HMDA) (purchased from Huafon Chemical Co., Ltd., serving as a diamine compound), ethylene carbonate (EC) (purchased from Oriental Union Chemical Corporation, serving as a carbonate compound), and polyethylene gycol 1000 (PEG 1000) (purchased from Oriental Union Chemical Corporation, serving as a diol compound) were mixed at a molar ratio of 1:2.1:0.26 in a 1 L stainless steel reactor, and then subjected to a carbamation reaction at 75°C under stirring for 5 hours, so as to obtain a carbamate mixture (including 2-hydroxyethyl (aminohexyl)carbamate, di(2-hydroxyethyl) hexamethylene dicarbamate) that had an amine value of 61.6 meq/kg which was determined according to the procedures set forth in ASTM D2074.

After adding stannous chloride (SnCl₂) (serving as a catalyst) into the aforesaid reactor, a polycondensation reaction was conducted at 180°C and at a pressure of not greater than 30 torr for 1 hour, followed by controlling the pressure by reduction of the same to 3 torr until the product viscosity no longer increased, so as to obtain a condensation type non-isocyanate polyurethane composition of E1.

### Examples 2 (E2)

The procedures and conditions for preparing the condensation type non-isocyanate polyurethane composition of E2 were substantially similar to those of E1, except that in E2, PEG 1000 was replaced with poly(tetramethylene ether) glycol 1000 (PTMEG 1000) (purchased from Formosa Asahi Spandex Co., Ltd.), HMDA, EC and PTMEG 1000 were mixed at a molar ratio of 1:2.1:0.26, and the carbamate mixture had an amine value of 49.8 meq/kg which was determined according to the procedures set forth in ASTM D2074.

### Example 3 (E3)

The procedures and conditions for preparing the condensation type non-isocyanate polyurethane composition of E3 were substantially similar to those of E1, except that in E3, PEG 1000 was replaced with polybutylene adipate 1000 (PBA 1000) (purchased from Evermore Chemical Industry Co., Ltd.), HMDA, EC and PBA 1000 were mixed at a molar ratio of 1:2.1:0.26, and the carbamate mixture had an amine value of 48.1 meq/kg which was determined according to the procedures set forth in ASTM D2074.

### Example 4 (E4)

The procedures and conditions for preparing the condensation type non-isocyanate polyurethane composition of E4 were substantially similar to those of E1, except that in E4, PEG 1000 was replaced with poly(ε-caprolactone) 2000 (PCL 2000) (purchased from Huafon Chemical Co., Ltd.), HMDA, EC and PCL 2000 were mixed at a molar ratio of 1:2.1:0.13, and the carbamate mixture had an amine value of 75.2 meq/kg which was determined according to the procedures set forth in ASTM D2074.

### Example 5 (E5)

The procedures and conditions for preparing the condensation type non-isocyanate polyurethane composition of E5 were substantially similar to those of E1, except that in E5, PEG 1000 was replaced with poly(hexamethylene) diol 1000 (PHC diol 1000) (purchased from Tosoh Corporation, product name: Nippollan 981), HMDA, EC and PHC diol 1000 were mixed at a molar ratio of 1:2.1:0.26, and the carbamate mixture had an amine value of 10.6 meq/kg which was determined according to the procedures set forth in ASTM D2074.

### Example 6 (E6)

The procedures and conditions for preparing the condensation type non-isocyanate polyurethane composition of E6 were substantially similar to those of E5, except that in E6, EC was replaced with dimethyl carbonate (DMC) (purchased from Emperor Chemical Co., Ltd.), HMDA, DMC and PHC diol 1000 were mixed at a molar ratio of 1:10:1, the carbamate mixture had an amine value of 55.1 meq/kg which was determined according to the procedures set forth in ASTM D2074, and a reflux reaction was conducted at 85°C for 16 hours after addition of SnCl₂ and before the polycondensation reaction.

### Example 7 (E7)

The procedures and conditions for preparing the condensation type non-isocyanate polyurethane composition of E7 were substantially similar to those of E5, except that in E7, EC was replaced with diphenyl carbonate (DPC) (purchased from Emperor Chemical Co., Ltd.), HMDA, DPC and PHC diol 1000 were mixed at a molar ratio of 1:4:1, and the carbamate mixture had an amine value of 15.3 meq/kg which was determined according to the procedures set forth in ASTM D2074.

### Example 8 (E8)

The procedures and conditions for preparing the condensation type non-isocyanate polyurethane composition of E8 were substantially similar to those of E5, except that in E8, EC was replaced with di(diethylene gycol) carbonate (DEGC) (purchased from Emperor Chemical Co., Ltd.), HMDA, DEGC and PHC diol 1000 were mixed at a molar ratio of 1:4:1, and the carbamate mixture had an amine value of 32.3 meq/kg which was determined according to the procedures set forth in ASTM D2074.

### Example 9 (E9)

The procedures and conditions for preparing the condensation type non-isocyanate polyurethane composition of E9 were substantially similar to those of E5, except that in E9, HMDA was replaced with m-xylylenediamine (MXDA) (purchased from Mitsubishi Chemical Group), MXDA, EC and PHC diol 1000 were mixed at a molar ratio of 1:2.1:0.26, and the carbamate mixture had an amine value of 49.6 meq/kg which was determined according to the procedures set forth in ASTM D2074.

### Example 10 (E10)

The procedures and conditions for preparing the condensation type non-isocyanate polyurethane composition of E10 were substantially similar to those of E5, except that in E10, HMDA was replaced with 1,3-bis(aminomethyl)cyclohexane (1,3-BAC) (purchased from Mitsubishi Chemical Group), 1,3-BAC, EC and PHC diol 1000 were mixed at a molar ratio of 1:2.1:0.26, and the carbamate mixture had an amine value of 50.9 meq/kg which was determined according to the procedures set forth in ASTM D2074.

### Example 11 (E11)

The procedures and conditions for preparing the condensation type non-isocyanate polyurethane composition of E11 were substantially similar to those of E5, except that in E11, HMDA was replaced with decanediamine (DMDA) (purchased from Mitsubishi Chemical Group), DMDA, EC and PHC diol 1000 were mixed at a molar ratio of 1:2.1:0.26, and the carbamate mixture had an amine value of 25.1 meq/kg which was determined according to the procedures set forth in ASTM D2074.

### Comparative Example 1 (CE1)

The procedures and conditions for preparing the non-isocyanate polyurethane composition of CE1 were substantially similar to those of E1, except that in CE1, HMDA, EC and PEG 1000 were subjected to the carbamation reaction at 130°C under stirring for 5 hours to obtain a carbamate mixture having an amine value of 375.6 meq/kg, which was determined according to the procedures set forth in ASTM D2074, followed by the polycondensation reaction.

### Comparative Example 2 (CE2)

First, HMDA and EC were mixed at a molar ratio of 1:2.1 in a 1 L stainless steel reactor, and then subjected to a carbamation reaction at 75°C under stirring for 5 hours, so as to obtain a carbamate mixture. Next, the carbamate mixture was subjected to washing, filtration (to remove liquids therein) and recrystallization steps, so as to obtain an intermediate product (in a solid form) mainly composed of di(2-hydroxyethyl) hexamethylene dicarbamate having an amine value of 0.6 meq/kg, which was determined according to the procedures set forth in ASTM D2074. Afterwards, the intermediate product and PEG 1000 were mixed at a molar ratio of 1:0.26, followed by a polycondensation reaction conducted using the procedures and conditions as described in E1, so as to obtain a non-isocyanate polyurethane composition of CE2.

### Comparative Example 3 (CE3)

TPU pellets purchased from Great Eastern Resins Industrial Co. Ltd. (product no.:3085AU), which were obtained by reacting PTMEG and MDI, directly serve as a polyurethane composition of CE3.

### Comparative Example 4(CE4)

The procedures and conditions for preparing the non-isocyanate polyurethane composition of CE4 were substantially similar to those of E6, except for the following differences. First, HMDA and DMC were reacted to obtain hexamethylene dicarbamate, which were then reacted with 1,4-butanediol (BDO) (purchased from Emperor Chemical Co., Ltd.) under a nitrogen environment at 160°C for 2 hours, followed by addition of PHC diol 1000, such that a molar ratio of HMDA, DMC, BDO and PHC diol 1000 is 1:10:4:0.26. The carbamate mixture obtained after the carbamation reaction had an amine value of 1.2 meq/kg, which was determined according to the procedures set forth in D2074. Next, a reflux reaction was conducted at 85°C for 16 hours after addition of SnCl₂. Thereafter, a polycondensation reaction was conducted at 180°C and at a pressure of not greater than 30 torr for 1 hour, followed by controlling the pressure by reduction of the same to 3 torr until the product viscosity no longer increased, so as to obtain a non-isocyanate polyurethane composition of CE4.

### Property evaluation

Each of the polyurethane compositions of E1 to E11 and CE1 to CE4 were subjected to measurements described below. The results for the measurements are listed in Table 1 below.

### 1. Amine value

Each of the polyurethane compositions of E1 to E11 and CE1 to CE4 was subjected to measurement of amine value according to the procedures set forth in ASTM D2074. The detail step as below: (1) Sample preparation: Accurately weigh about 0.5-1 g of sample into a dry conical flask. (2) Dissolve the sample: Add about 50 mL of DMAc or acetone solvent to completely dissolve the sample (heating and stirring can be used to promote dissolution). (3) Add indicator: Add 3 to 5 drops of bromocresol green indicator, the solution should turn blue-green.(4) Titration: Titrate slowly with 0.05 N hydrochloric acid and continue stirring until the color of the solution changes from blue-green to distinct yellow, which is the endpoint. (5) Record data: Record the volume of hydrochloric acid consumed (mL). (6)Calculation Amine Value (mg KOH/g) = (V × N × 56.1) / W, (V: Volume of HCl consumed in titration (mL) ; N: HCl concentration (Normal, N) ; W: sample weight (g) ; 56.1: KOH equivalent (mg/mmol).

### 2. Molecular weight

Each of the polyurethane compositions of E1 to E11 and CE1 to CE5 was subjected to measurement of number average molecular weight (Mₙ) according to the procedures set forth in ASTM D3536. The Mn is determined using Gel Permeation Chromatography (GPC) with polystyrene as a standard and dimethylacetamide(DMAc) as an eluent. The GPC apparatus are Waters 1525(Binary HPLC Pump) and Waters 2487(Dual Absorbance Detector).

### 3. Molar ratio of components

Each of the polyurethane compositions of E1 to E11 and CE1 to CE5 was subjected to calculation of a molar ratio of the first polyurethane (amine group is present at the end of the molecule) represented by Formula (I) to the second polyurethane (amine group is not present at the end of the molecule) represented by Formula (II) based on the aforesaid amine value and the Mₙ. Here, the calculation is as follows: molar ratio of first polyurethane: amine value/[2*(10⁶/Mn)]*100; Molar ratio of second polyurethane : 100-amine value/[2*(10⁶/Mn)]*100; For example, in E1 the amine value is 31.3meq/kg;the molar ratio of first polyurethane is 31.3/(2*10⁶/48000)*100=75.1, and the molar ratio of the second polyurethane in E1 is 00-75.1=24.9.

### 4. Adhesion strength

First, an industrial fiber cloth (Manufacturer: Far Eastern New Century Corp.; Product no.: 4630-T2) was cut into a dimension of 10 cm × 2.54 cm, and then the polyurethane compositions of E1 to E11 and CE1 to CE4 were each bonded to the industrial fiber cloth under a pressure of 3 kg at 140°C for 1 minute. Next, the resultant polyurethane composition-containing industrial fiber cloth was immersed in 5 wt% of polyglycerol polyglycidyl ether solution (purchased from Nagase Chemtex; product no.: Denacol^{®}EX-512), which was a cross-linking agent, for 10 minutes, followed by drying in an oven at 110°C for 20 minutes, so as to obtain a treated polyurethane composition-containing industrial fiber cloth. At the same time, another treated polyurethane composition-containing industrial fiber cloth was prepared according to the aforesaid procedures. Thereafter, the aforesaid two pieces of the treated polyurethane composition-containing industrial fiber cloths were subjected hot-melt bonding under a pressure of 3 kg at 140°C for 1 minute, followed by determination of adhesion strength using a tensile testing machine (Manufacturer: Instron) according to the procedures set forth in ASTM D4393.

**Table 1**

| | Molar ratio of first polyurethane to second polyurethane | Amine value (meq/kg) | Number average molecular weight (Mₙ) | Adhesion strength (N/cm) |
|---|---|---|---|---|
| E1 | 75.1 : 24.9 | 31.3 | 48000 | 9.71 |
| E2 | 56.0 : 44.0 | 22.4 | 50000 | 10.28 |
| E3 | 73.4 : 26.6 | 28.8 | 51000 | 15.78 |
| E4 | 65.9 : 34.1 | 26.9 | 49000 | 11.86 |
| E5 | 73.7 : 26.3 | 14.6 | 101000 | 12.86 |
| E6 | 50.4 : 49.6 | 22.9 | 44000 | 14.32 |
| E7 | 37.9 : 62.1 | 18.5 | 41000 | 13.88 |
| E8 | 45.3 : 54.7 | 19.7 | 46000 | 13.26 |
| E9 | 31.6 : 68.4 | 12.4 | 81000 | 11.25 |
| E10 | 28.6 : 71.4 | 10.6 | 94000 | 10.24 |
| E11 | 59.3 : 40.7 | 15.6 | 76000 | 13.09 |
| CE1 | 100.0 : 0.0 | 45.2 | 25000 | 1.18 |
| CE2 | 15.9:84.1 | 6.7 | 47500 | 5.07 |
| CE3 | 6.3:93.7 | 0.7 | 180000 | 3.06 |
| CE4 | 18.9:91.1 | 9.2 | 41000 | 5.62 |

As shown in Table 1, the condensation type non-isocyanate polyurethane compositions of E1 to E11 exhibited an amine value ranging from 10.2 meq/kg to 31.3 meq/kg, a number average molecular weight ranging from 41000 to 101000, and an adhesion strength to epoxy resin of greater than 9.71 N/cm; in contrast, the non-isocyanate polyurethane composition of CE1 exhibited an amine value of 45.2 meq/kg, the polyurethane compositions of CE2, CE3 and CE4 exhibited an amine value of not greater than 9.2 meq/kg, and an adhesion strength of the polyurethane compositions of CE1 to CE4 to epoxy resin was not greater than 7.65 N/cm, indicating that the polyurethane compositions of CE1 to CE4 had insufficient adhesion to epoxy resin.

It should be noted that the non-isocyanate polyurethane composition of CE2 is substantially similar to the biodegradable thermoplastic poly(ether urethane) of CN 104513393 B. As shown in Table 2 below, the amine value of the non-isocyanate polyurethane composition of CE2, whose preparation method includes a purification step, was less than the amine value of the condensation type non-isocyanate polyurethane composition of E2, i.e., only 6.4 meq/kg, indicating that the non-isocyanate polyurethane composition of CE2 has insufficient active functional groups, resulting in the same having insufficient adhesion strength. To be specific, the method for preparing the non-isocyanate polyurethane composition of CE2 includes the purification step and a recrystallization step, such that the intermediate product obtained after the purification step only includes dicarbamate; in contrast, the purification step was omitted from the method for preparing the condensation type non-isocyanate polyurethane composition of E2, such that the intermediate product in E2 was a carbamate mixture which included dicarbamate and amino carbamate and which was directly subjected to the subsequent polymerization process (i.e., the reactants subjected to the polycondensation reaction in E2 were different from those in CE2). Therefore, after the polymerization process, the non-isocyanate polyurethane composition of CE2 would only include the second polyurethane represented by Formula (II), resulting in the non-isocyanate polyurethane composition of CE2 having insufficient active functional groups (amine groups), whereas the condensation type non-isocyanate polyurethane composition of the present disclosure includes the second polyurethane represented by Formula (II) and the first polyurethane with an amine group present at the end of the molecule and represented by Formula (I), and hence the condensation type non-isocyanate polyurethane composition of the present disclosure is provided with sufficient active functional groups so as to improve adhesive strength of the same.

**Table 2**

| | Molar ratio of first polyurethane to second polyurethane | Amine value (meq/kg) | Mₙ | Adhesion strength (N/cm) |
|---|---|---|---|---|
| E2 | 56.0 : 44.0 | 22.4 | 50000 | 10.28 |
| CE2 | 15.9 : 84.1 | 6.7 | 47500 | 5.07 |

It should be noted that the non-isocyanate polyurethane composition of CE4 is substantially similar to the bio-based non-isocyanate polyurethane of CN 116903854 A. As shown in Table 3 below, the amine value of the non-isocyanate polyurethane composition of CE4 was less than the amine value of the condensation type non-isocyanate polyurethane composition of E6, i.e., only 8.1 meq/kg, indicating that the non-isocyanate polyurethane composition of CE4 has insufficient active functional groups, resulting in the same having insufficient adhesion strength. To be specific, the non-isocyanate polyurethane composition of CE4 was prepared in 3 steps, in which the intermediate product was hydroxyl-terminated prepolymer, resulting in insufficient active functional groups (i.e., amine groups) at the end of the polyurethane, and hence the non-isocyanate polyurethane composition of CE4 has a relatively low adhesion strength.

**Table 3**

| | Molar ratio of first polyurethane to second polyurethane | Amine value (meq/kg) | Mₙ | Adhesion strength (N/cm) |
|---|---|---|---|---|
| E6 | 50.4: 49.6 | 22.9 | 44000 | 14.32 |
| CE4 | 18.9: 91.1 | 9.2 | 41000 | 5.62 |

In summary, by virtue of using the condensation type non-isocyanate polyurethane composition of the present disclosure and an epoxy resin to form a composite material, the adhesion strength of the condensation type non-isocyanate polyurethane composition to the epoxy resin is relatively high. In addition, the method for preparing the condensation type non-isocyanate polyurethane composition of the present disclosure would not produce a large amount of liquid waste that needs to be recycled separately. Therefore, the purpose of the present disclosure can indeed be achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

While the disclosure has been described in connection with what is (are) considered the exemplary embodiment(s), it is understood that this disclosure is not limited to the disclosed embodiment(s) but is intended to cover various arrangements included within the spirit and scope of the broadest interpretation so as to encompass all such modifications and equivalent arrangements.

## Claims

1. A condensation type polyurethane composition, comprising:
a first polyurethane represented by Formula (I) and a second polyurethane represented by Formula (II) 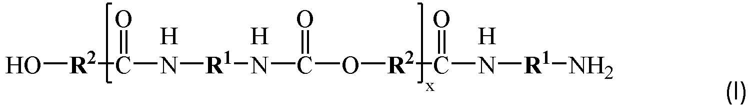 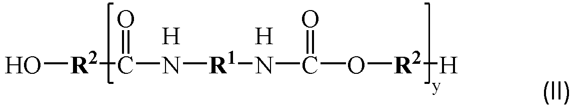 wherein
x is an integer ranging from 2 to 100;
y is an integer ranging from 2 to 100;
R¹ is a hydrocarbylene group of C₂ to C₂₀; and
R² is 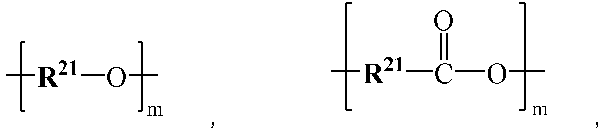 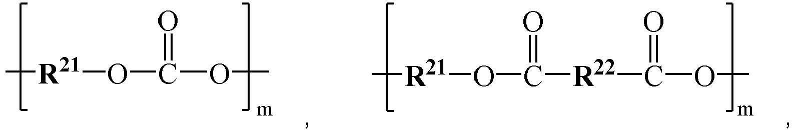 or combinations thereof,
wherein
each of R²¹ and R²² is independently a hydrocarbylene group of C₂ to C₂₀; and
m is an integer ranging from 1 to 250; wherein the condensation type polyurethane composition has an amine value of at least 10 meq/kg.

2. The condensation type polyurethane composition as claimed in claim 1, wherein R² is 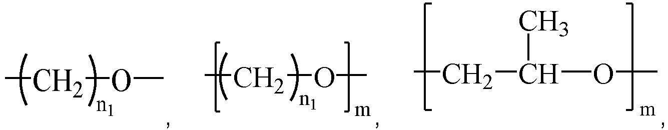 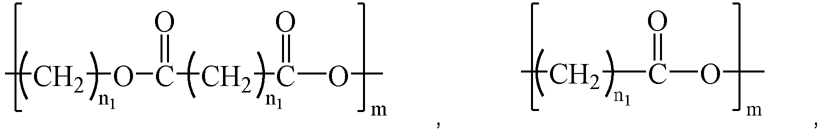 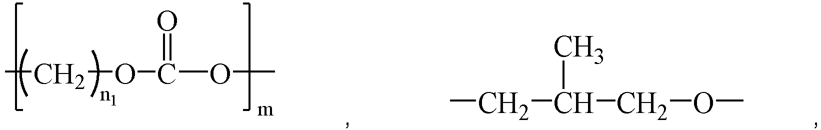 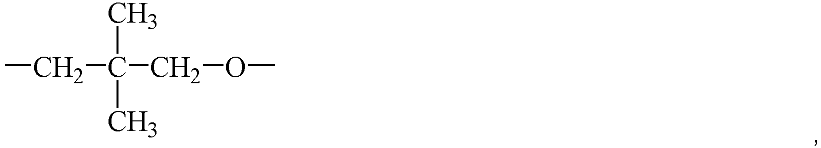 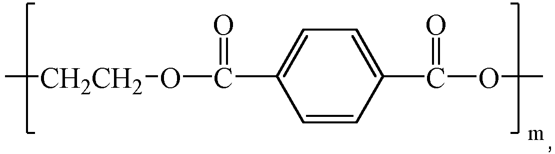 or combinations thereof, wherein
n₁ is an integer ranging from 2 to 20; and
m is an integer ranging from 1 to 250.

3. The condensation type polyurethane composition as claimed in claim 1, wherein R¹ is 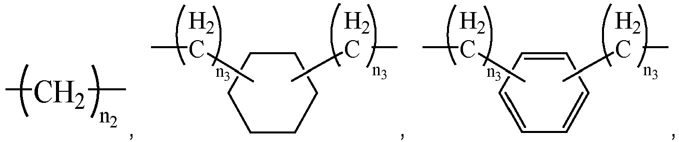 or combinations thereof, wherein n₂ is an integer ranging from 5 to 10; and n₃ is an integer ranging from 1 to 10.

4. The condensation type polyurethane composition as claimed in claim 1, wherein the amine value ranges from 10 meq/kg to 35 meq/kg.

5. The condensation type polyurethane composition as claimed in claim 1, wherein the molar ratio of said first polyurethane to said second polyurethane is in the range from 20:80 to 80:20, preferably from 24:76 to 76:24.

6. The condensation type polyurethane composition as claimed in claim 1, wherein m is an integer ranging from 2 to 100.

7. The condensation type polyurethane composition according to any one of claims 1 to 6, which is a condensation type non-isocyanate polyurethane composition.

8. A method for preparing the condensation type polyurethane composition as defined in any one of claims 1 to 7, wherein the method comprises
subjecting a diamine compound represented by Formula (III) and a carbonate compound to a carbamation reaction so as to form a carbamate mixture that includes an amine hydrocarbamate and a hydrocarbon dicarbamate diester, and then
subjecting the carbamate mixture and a diol compound represented by Formula (IV) to a polycondensation reaction so as to form the polyurethane composition,
H₂N-**R¹**-NH₂ (III)
HO-**R²**-H (IV)
whrein in Formula (III) and Formula (IV), R¹ is a hydrocarbylene group of C₂ to C₂₀; R² is 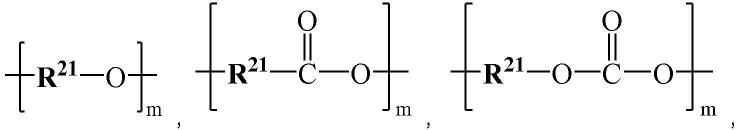 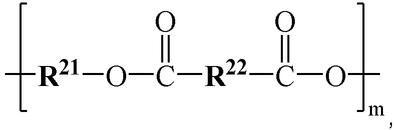 or combinations thereof, each of R²¹ and R²² is independently a hydrocarbylene group of C₂ to C₂₀, and m is an integer ranging from 1 to 250.

9. The method according to claim 8, wherein the carbamation reaction is conducted at a temperature ranging from 30°C to 120°C.

10. The method according to claim 8 or 9, wherein the polycondensation reaction is conducted at a temperature ranging from 100°C to 200°C.

11. The method according to any one of claims 8 to 10, wherein the molar ratio of the diamine compound to the carbonate compound ranges from 1:2 to 1:10.

12. The method according to any one of claims 8 to 11, wherein the a molar ratio of the hydrocarbon dicarbamate diester in the carbamate mixture to the diol compound ranges from 1:0.01 to 1:2.

13. The method according to any one of claims 8 to 12, wherein the molar ratio of the hydrocarbon dicarbamate diester in the carbamate mixture to the diol compound ranges from 1:0.2 to 1:1.

14. The method according to any one of claims 8 to 13, wherein the polycondensation reaction is conducted in the presence of a catalyst, which is preferably selected from the group consisting of stannous chloride, dibutyltin oxide, tin oxide, zinc oxide, zinc acetate, zinc chloride, aluminum acetate, aluminum chloride, tetrabutyl titanate, tetraisopropyl titanate, and combinations thereof.

15. The method according to any one of claims 8 to 14, wherein the carbamate mixture is not subjected to a purification step before the polycondensation reaction, preferably wherein the carbamate mixture is not subjected to a recrystallization step before the polycondensation reaction.
